Europäisches Patentamt

European Patent Office

Office européen des brevets

(19)

(11) **EP 1 064 816 B1**

(12) **EUROPEAN PATENT SPECIFICATION**

(45) Date of publication and mention
of the grant of the patent:
**24.07.2002 Bulletin 2002/30**

(51) Int Cl.⁷: **H04Q 7/38**

(86) International application number:
**PCT/EP99/01896**

(21) Application number: **99916853.7**

(22) Date of filing: **19.03.1999**

(87) International publication number:
**WO 99/49685 (30.09.1999 Gazette 1999/39)**

(54) **METHOD FOR THE REALIZATION OF A QUICK AND COMPLETE PRE-SELECTION OF THE CHANNELS IN A DIGITAL TELECOMMUNICATION SYSTEM**

**VERFAHREN ZUR DURCHFÜHRUNG EINER SCHNELLEN UND VOLLSTÄNDIGEN KANALVORWAHL IN EINEM DIGITALEN TELEKOMMUNIKATIONSSYSTEM**

**PROCEDE DE PRE-SELECTION RAPIDE ET COMPLETE DE CANAUX DANS UN SYSTEME DE TELECOMMUNICATION NUMERIQUE**

(84) Designated Contracting States:
**DE FI FR SE**

(30) Priority: **26.03.1998 IT MI980631**

(43) Date of publication of application:
**03.01.2001 Bulletin 2001/01**

(73) Proprietors:
• **Italtel s.p.a.**
**20154 Milano (IT)**
• **Siemens Information and Communication Networks S.p.A.**
**20019 Settimo Milanese (IT)**

(72) Inventor: **ROSINA, Giancarlo**
**I-20018 Sedriano (IT)**

(74) Representative: **Giustini, Delio**
**Siemens Information and**
**Communication Networks S.p.A.**
**Palazzo Gorky**
**Via Monfalcone, 1**
**20092 Cinisello Balsamo (IT)**

(56) References cited:
**EP-A- 0 486 089          GB-A- 2 297 014**

• **MCCANN S ET AL: "DIGITAL EUROPEAN CORDLESS TELECOMMUNICATIONS SYSTEM BLIND SPOT ALGORITHM EVALUATION RESULTS" COMMUNICATIONS: CONNECTING THE FUTURE, SAN DIEGO, DEC. 2 - 5, 1990, vol. 2, 2 December 1990 (1990-12-02), pages 1023-1027, XP000220987 INSTITUTE OF ELECTRICAL AND ELECTRONICS ENGINEERSISBN: 0-87942-632-2**
• **CHUNG-MING YUEN ET AL: "An ultra-fast locking frequency synthesizer algorithm for zero blind slot communication in Digital European Cordless Telephone (DECT)" 1997 IEEE MTT-SYMPOSIUM ON TECHNOLOGIES FOR WIRELESS APPLICATIONS DIGEST (CAT. NO.97TH8188), 1997 IEEE MTT-S SYMPOSIUM ON TECHNOLOGIES FOR WIRELESS APPLICATIONS DIGEST, VANCOUVER, BC, CANADA, 23-26 FEB. 1997, pages 61-64, XP002110933 1997, New York, NY, USA, IEEE, USAISBN: 0-7803-3318-7**
• **CAPONE A ET AL: "PACKET DATA ACCESS IN DECT SYSTEMS" 1996 IEEE 46TH. VEHICULAR TECHNOLOGY CONFERENCE, MOBILE TECHNOLOGY FOR THE HUMAN RACE ATLANTA, APR. 28 - MAY 1, 1996, vol. 2, no. CONF. 46, 28 April 1996 (1996-04-28), pages 839-843, XP000593101 INSTITUTE OF ELECTRICAL AND ELECTRONICS ENGINEERSISBN: 0-7803-3158-3**

## Description

## Technical Field

The present invention relates to a digital telecommunication system with time division access technique TDMA (Time Division Multiple Access), and in particular but not exclusively systems operating according to the DECT standard (Digital Enhanced Cordless Telecommunications).

In particular the present invention relates to the radio access procedure which in every wireless or radiomobile systems has to maximize the probability to obtain and to maintain the telephone connections.

In the following description, reference will be especially made to a DECT system; this is not limiting the invention, which finds general application in systems where the connection is realized between two radio TDMA transceiving units, one fixed and one mobile.

In the DECT case the following definitions apply:

- Fixed Part (FP): a set composed of Radio Transceiving Units and one Central Controller (CCFP) performing the Radio Access functions
- Radio Fixed Part (RFP) or Base Station: a fixed unit containing the radio transceiver(s)
- Portable Part (PP): a mobile radio transceiving unit
- Wireless Relay Station (WRS): a radio tranceiver unit, fiexd or mobile, able to perform as a Fixed Part when connected to a Portable Part and as a Portable Part when connected to a RFP. The two connections may be active simultaneously
- Fast Hopping equipments: equipments able to change the frequency carrier in one guard time period
- Slow Hopping equipments: equipments able to change the frequency carrier in a time comparable to a time slot period

As already known, in a DECT system the transmission/reception of the signals between the two radio units, mobile (Portable Part) or PP and fixed (Radio Fixed Part) or RFP, respectively, is organized in frames. The frame is subdivided into two subframes, of which normally the first halfframe is assigned to the transmission in the direction from the fixed unit towards the mobile unit (downlink direction) and the second halfframe to the transmission from a mobile unit towards a fixed unit (uplink direction).

Moreover each halfframe is subdivided into 12 time intervals according to a time division access technique TDMA (Time Division Multiple Access). The transmission inside a specific time slot uses one of the 10 radio carriers/frequencies arranged, for instance, in Europe, in the band (1880 -1900 MHz).

To set-up the connections, the DECT system uses the so-called Dynamic Channel Selection (DCS) based on the fact that the channel choice is made in real time following environmental conditions and in that the choice of the channel used for the connection is made by the Portable Part. The fixed part may cooperate in this procedure proposing alternative channels to PPs.

The portable part draws up a list of channels and Base Stations (RFPs) using the RSSI measures (RSSI: Received Signal Strength Indication, that is electromagnetic field level values at a radio receiver) and the Base Station identifiers transmitted on air by the RFP on one or two beacon channels or Dummy Bearers.

In particular the channel list is divided into bands according to a set of RSSI thresholds. Channels with an RSSI measure inferior to the minimum threshold are considered as "quiet" and they may be selected immediately. On the contrary the channels with an RSSI measure superior to a maximum threshold are considered as "busy" and cannot be selected. The channels with an RSSI measure comprised between the minimum and the maximum limits are ordered in function of the band they belong to and may be selected starting from the lowest band.

On the basis of such informations the portable part is therefore able to get access to the less interfered channel. It is also able to connect to the best Base Station, that is the RFP received with highest power level.

All considerations here reported apply to PP equipments as well as to WRS equipments when communicating with an RFP. Therefore what will be described hereafter for Portable Parts (PP) can also be applied to the Wireless Relay Stations (WRS). For simplicity reasons hereafter reference will only be made to the Portable Parts.

## Background Art

According to the actual DECT standard the initial access procedure follows the steps described in the following text.

Initially the RFP is activated and transmits by air all system informations on one or two beacon channels indicated in the particular technology by the term "Dummy Bearer".

The RFP transmits also the so-called PSCN information (Primary receiver Scan Carrier Number) which enables the terminal to transmit the first access request when the RFP is receiving.

The Portable Part performs the synchronization procedure in two steps:

> I. Capture of the time slots on air via synchronization, and from the captured packets, derivation of the timing of the RFP. This makes possible to read all system informations.
>
> II. Reading of the system informations, such as the identity of the RFP and of the FP and determine the real access possibility in relation to previous subscription.

Then the PP performs the following procedures:

1. compilation of channels and Base Stations lists;
2. choice of the best RFP (that is the RFP received with maximum power level);
3. choice of the less interfered channel (that is the one received with the minimum power level) and access request of that channel to the selected RFP.

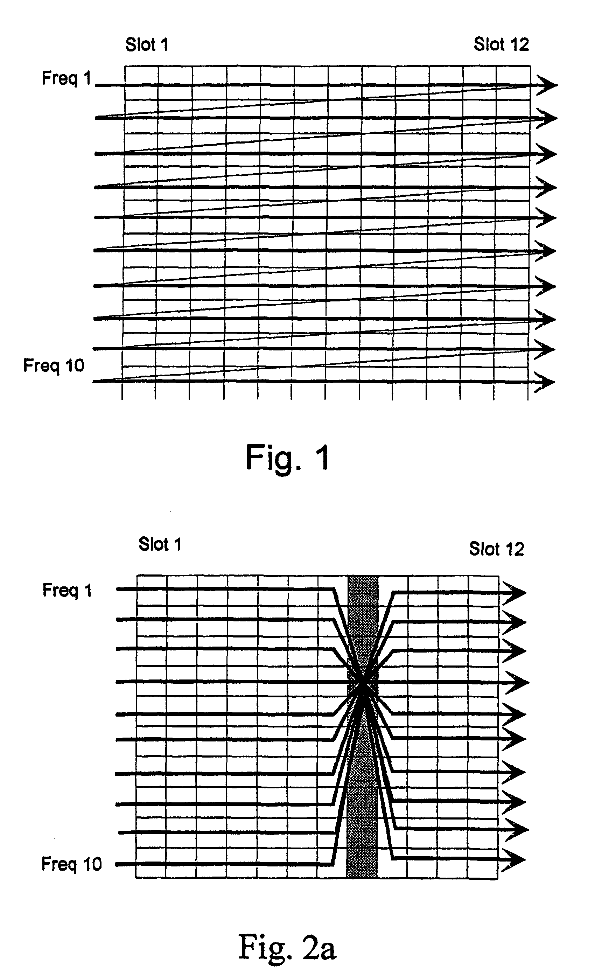

The channel list will be created through a scanning of the time-frequency matrix with a free scanning sequence. Fig. 1 represents the scanning sequence turning out to be the fastest at equal consumption and it requires a period of time equal to 10 frames or 100 ms.

In abscissa time slots and in ordinate frequencies are reported, so that each square corresponds to one physical channel, that is a combination of time slot and frequency indicated in the specific technique by the term "bearer" or radio channel.

As said before, PP compiles two lists referred to received RFPs and channels in use; RFP and channels are ordered according the RSSI parameter. The RFP to which try the first set-up is chosen according to the maximum RSSI value, the channel according to the minimum RSSI value, starting from the lowest band (presumably it contains the list of unoccupied channels, the so-called "quiet" channels). This criterium assures a minimum interference connection to the «nearest» RFP.

Once the channel has been chosen, it is necessary to wait until the RFP will get in reception on the same channel and then forward the access request. According to the scanning position of the RFP, the waiting time ranges from 0 to 100 ms.

During the passage from one cell to a neighbouring one (handover) the channel list - in the known systems - has not necessarily to be updated, however it is suggested to carry out a periodical updating, for example every 30 seconds.

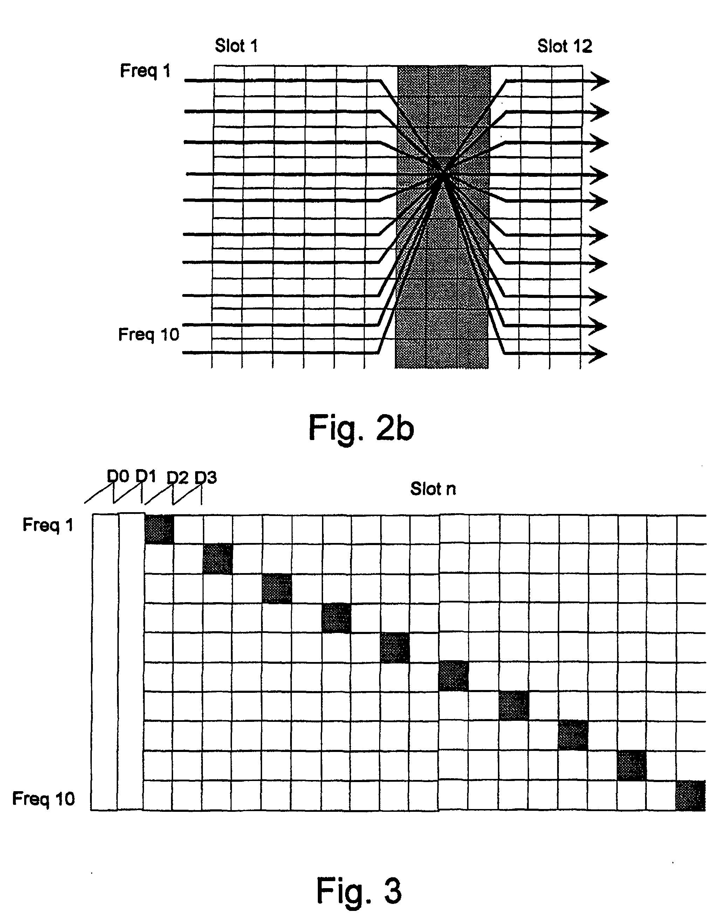

However this possible updating has some limits: it cannot take into consideration the columns of the channel in use for the so-called "Fast Hopping" equipments (Fig. 2a); for «Slow Hopping» equipments (Fig. 2b) the limitation is extended to the three channel columns including the one with channels in use . In the Figures 2a and 2b the channels represented in dark grey are in use, while the channels which cannot be monitored or which are "blind" are shown in a clear grey. In conclusion the fast hopping equipments have only one blind column, while the slow hopping ones have three blind channels.

Therefore there is a limitation due to the fact that the updating of the channel list results incomplete unless not suspending the connection on the channel in use for 10 frames, thus carrying out an exhaustive scanning.

The use of the incomplete table may make the access difficult in case no quiet channels are available, for example in a situation of congestion.

More precisely there are substantially two limits in the known systems related to the access speed and to the completeness of the scanning, respectively.

The access speed is determined by the channel selection time, ranging from 20 ms (with an already updated list 2 frames are sufficient) to 100 ms (complete channel scanning), and by the waiting period to forward the access request which needs from 0 to 100ms. Therefore the gloabl time between the beginning of the research and the forwarding of the first access request reaches from 20 to 200 ms.

Regarding the incompleteness of the scanning, there is a missing column for fast hopping equipments (see Fig. 2a) or three columns for slow hopping equipments (see Fig. 2b). This incompleteness can be avoided suspending the communication on the channel in use for at least 10 frames, completing the scanning on the channels which were in the "blind" positions.

These limitations may lead to a situation where, owing to congestion, the Bearer Handover procedure may fail despite the existence of suitable channels (this means not interfered), in the blind columns.

EP 486089 discloses an operation method for a TDMA cordless telephone system, e.g. DECT system, using a secondary station which, when out of lock, scans all physical channels in a carrier channel in specific sequence. The scanning sequence of the secondary station is controlled so as to allow lock to occur sooner there saving battery power.

This reference however does not suggest how to overcome the above mentioned limitations of the known systems in which the Bearer Handover procedure may fail despite the existence of suitable channels (this means not interfered), in the blind columns.

## Objects of the Invention

The main object of the present invention is to overcome the drawbacks and limitations mentioned before, and in particular to overcome the above-mentioned limit concerning the Bearer Handover procedure. This improvement regards both Fixed and Mobile equipments (RFPs, WRSs and PPs) and both fast hopping equipments (with one blind column) and slow hopping equipments (with three blind columns). Typically, but not necessarily, RFPs are fast hopping and PPs are slow hopping.

## Brief Description of the Drawings

The invention achieves these scopes through a method with the characteristics illustrated In claim 1, through a receiver according to claim 9, through a radiomobile portable unit according to claim 10 and through a fixed unit according to claim 12.

Further advantageous characteristics are subject of the following claims.

According to the method proposed by the invention, the channel list will be updated within a preset time, in particular 30 seconds, and if there are no "quiet" channels, a quick scanning (within one time slot) of the blind channels will be carried out which enables a handover procedure if such quick scanning supplies indications about the presence of a "quiet" or low interfered channel among the blind ones.

Now the invention will be described in more details with reference to a preferred but not limiting embodiment, illustrated with reference to the annexed drawings, where:

> Fig. 1 (already described) illustrates the scanning sequence which needs a period of time equal to 10 frames;
> Figures 2a and 2b (already described) show the blind columns in the case of fast hopping and slow hopping equipment, respectively.
> Fig. 3 illustrates the quick scanning according to the method of the present invention, and
> Fig. 4 shows the block scheme of a device for the implementation of the method according to the present invention.

**Detailed Description of a Preferred Embodiment of the Invention**

Hereafter the implementation case of the fast and complete selection method will be at first taken into consideration on the Portable Part (or WRS).

In the case of a connection in progress in which, using the "incomplete table", the portable part is able to identify alternative "quiet" channels, a "quiet" channel is chosen and it will be controlled for two following frames. If its RSSI value is not changed for more than 12 dB, the terminal forwards the handover request. In that particular situation it is already possible to obtain the maximum performances, if the table will be kept updated.

If on the other hand the available incomplete table does not present "quiet" channels, according to the invention an accelerated procedure will be applied suitable to provide a complete table in a very reduced time. The new scanning will be carried out on the missing column(s) according to the cycle described hereafter with reference to Fig. 3.

With reference to Fig. 3 the method according to the invention imply to carry out the scanning of the channels of a blind column within the duration of a single time slot. The figure shows time slot N, and the dark squares indicate how the 10 channels of the blind column will be scanned in sequence, each time for a period of time much shorter compared to a time slot, with an interval (D3) between two adjacent scannings and with an initial Interval which will be illustrated below.

More precisely a first interval of the time slot itself is indicated by D0, and it represents the delay of the signal compared to the reference timing. This parameter influences the size of the correlation window (the window where a correlation is expected), which consists of a maximum of 14 bits according to the standard and 22 bits for a preferential embodiment adopted by the Applicant.

The following interval D1 consists In the length of the preamble (32 bits) at the end of which the correlation will start.

The remaining portion of the time slot will be subdivided in 10 intervals D2, each one corresponding to the measure time of the RSSI value on different channels and intervals D3 corresponding to the switching time of the synthesizer from frequency J to frequency J+1 (33 bits for the above-mentioned preferential implementation adopted by the applicant). Although the value of D2 is imposed by the other restraints, it is anyhow necessary to push it to the maximum In order to get a significant RSSI measure.

Therefore the relation (in bits) is:

$$Ltot=D1+9*(D2+D3)+D2$$

where Ltot is the length of the time slot.

Then the maximum time D2 for the definition of the RSSI for each channel is given by:

$$D2 = [Ltot-D1 -9*D3]/10$$

In the above-mentioned suppositions we obtain D2 = 9.5 bits.

Therefore in the method according to the invention the measure of RSSI of each one of the channels of the blind column takes 9.5 bits. In this condition, as the measure is only realized on a limited portion of the time slot, "quiet" channel Indication could turn out as not completely reliable, however there is a very high probability to justify the suspension of the communication in progress for only one frame in order to make a standard RSSI measure (that is, on the complete slot) on the identified channel in order to obtain a suitable channel candidate.

It has to be noted that quiet channels are preferred, but it is possible to select channels belonging to upper bands, excluding only the bands defined as «busy». So, wherever «quiet» channels are mentioned, it is implicit to refer to an iterative procedure starting from the lowest band and progressing towards the upper bands, until the «busy» band is reached.

If no "quiet" channels nor channels belonging to other usable bands are detected by the fast scanning, the system can be considered congested, with no channels available.

Therefore thanks to the method according to the invention the scanning will be completed within the duration of a frame per blind column instead of 10 frames per blind column. Another frame will be necessary to confirm RSSI measure for every suitable channel identified.

As will be described hereafter, the method according to the invention may be also applied at RFP side with even greater advantages since the RFPs in general are Fast Hopping, and the addition of such procedure requires only minimum modifications, even with the disadvantage that the RFP does not know the exact moment when the Portable Part needs to carry out a handover procedure.

Supposing a scenario with Fast Hopping RFP and Slow Hopping PP the incompleteness of the table is equal to one column for the RFP and to three columns for the portable part for each channel in use.

The completion of the table could therefore be assigned to the RFP only which should carry out in sequence the following operations:

" keep the table of the channels updated using the fast method with a high frequency, using for example the lost time slots (a time slot is lost when, during a connection, the correlation operation on that time slot is not successful). In every case the already existing timer, equal to 30 s must not be overcome;
" communicate to the portable part, with a suitable frequency, the "quiet" channels placed in its blind column and in the two adjacent ones.

For this communication it Is possible to use the quality messages foreseen by the standard. In this way the portable part may overcome the actual limitations.

In the case the RFP carried out a Fast Setup procedure, which is not the typical case but anyhow foreseen by the DECT standard, it is up to the RFP itself and not to the Portable Part to choose and activate the radio bearer. In this case it is not necessary to send these informations to the portable part, but the list updated with the presented method is directly used by the RFP.

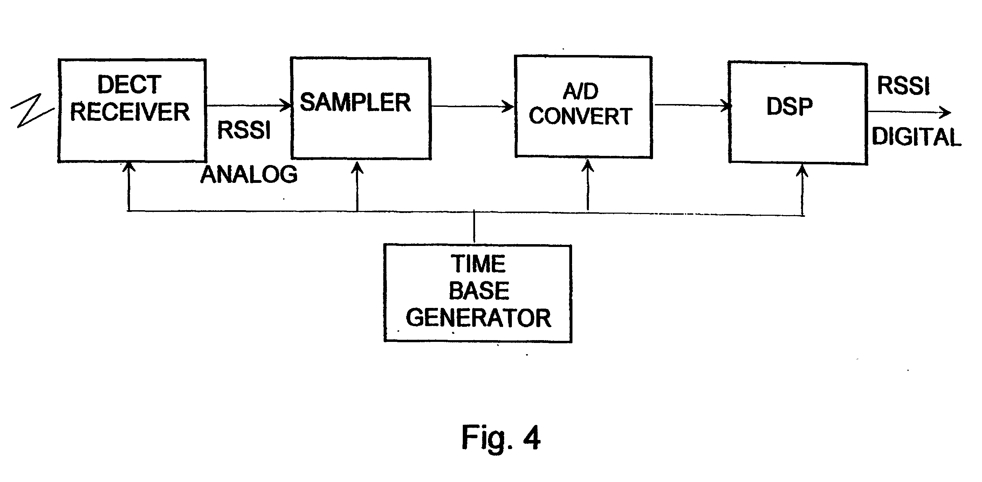

With reference to Fig. 4 a HW device will now be illustrated to implement the method according to the invention.

The HW device supporting the access strategy described before will be applied to a DECT receiver with the following characteristics:

1) single transceiver
2) fast hopping (the synthesizer is suitable to switch in a period of time comparable to 33 bits, less than the guard period) with a real time synthesizer programming. With reference to the example reported in Fig. 3 the programming time must be less than 9.5 bits;
3) presence of a measure circuit suitable to extract an analog signal with amplitude proportional to the value of the received field.

It is necessary to remember that such receiver has access to all 120 DECT physical channels.

The DECT RECEIVER described before must be also provided with the following parts:

" a fast sampler SAMPLER of the RSSI signal. The speed of this sampler may be for example equal to 20 Msample/s corresponding to 20 samples per microsecond (or per bit, given that one bit lasts 868 ns);
" an anolog/digital converter A/D CONVERTER suitable to digitalise said signal for example at 6 bits;
" a digital processor DSP suitable to implement a calculation algorithm in order to supply a final RSSI value (for example averaging the values of the samples acquired during the measure time);
" an appropriate module TIME BASE GENERATOR managing all timings.

Although the invention has been described with particular reference to some preferred forms of realization, it will be evident to those skilled in the art, that the present invention is not limited thereto, but further variations and modifications may be applied without departing from the scope thereof. It is thus contemplated that the present invention encompasses any and all such embodiments covered by the following claims.

**Claims**

1. Method for the realization of the access to a radio channel in a digital telecommunication system comprising a plurality of radiomobile portable units and/ or a plurality of Wireless Relay Stations or WRSs and at least one radio fixed unit or RFP, said plurality of PPs and/or WRSs and/or said at least one RFP being suitable to carry out the following steps of a process:

" scanning of the time-frequency matrix of the channels according to a preset modality;
" reading of the detected power values or RSSI of each channel and the identity data on channels transmitted by the corresponding RFP;
" compiling a RFP list using RSSI values and the correspondent RFP identity;
" compiling a channel list using the RSSI measures;
" organising the channel list into bands determined by suitable thresholds;
" selecting a channel of the lowest power band;
" following-up an access procedure on the chosen channel,

**characterized in that** it foresees the following steps for updating the channel list within a preset interval:

" scanning in sequence - within the duration of a time slot per column - all channels of the blind columns, measuring the RSSI;
" suspending of the communication in progress for one frame whenever the RSSI values of at least one channel of the column of the channel in use indicate a power lower than a preset threshold, and measuring the RSSI on this time slot in a conventional way thus completing the channel list updating.

2. Method according to claim 1, **characterized in that** said "complete" channel table will be drawn up by said plurality of PPs and /or WRSs.

3. Method according to claim 1, **characterized in that** said complete table of channels will be drawn up by said at least one RFP.

4. Method according to claim 2 or 3, **characterized in that** said measuring cycle of the RSSI value for every blind column channel takes place in an time interval equal to the duration of a time slot and the individual RSSI measures take place in a period of time D2 equal to:

$$D2 = [Ltot-D1 -9*D3]/10$$

where:

" D1 = length of the preamble
" D2 = measuring time of the RSSI value for each channel
" D3 = switching time of the synthesizer from the freq. J to the freq. J+1
" Ltot = duration of the time slot.

5. Method according to claim 3, **characterized in that** said at least one RFP drawing up the complete table of channels is of the fast hopping type and **in that** said measuring cycle of the RSSI value of the blind column coincides with the scanning of a single blind column if fast hopping terminals are used, or with the scanning of three blind columns if slow hopping terminals are used.

6. Method according to claim 5, **characterized in that** said at least RFP communicates the scanning result to said plurality of PPs and/or WRSs or it starts off a Fast Setup procedure which consists in the choice and in the activation of specific radio bearers.

7. Method according to claim 6, **characterized in that** said communication to said plurality of PPs and/or WRSs of the scanning results by said at least RFP will be carried out using the so-called "quality messages" according to the DECT standard.

8. Method according to claim 1 **characterized in that** said blind column is in number of one column for fast hopping equipment and are in number of three columns for slow hopping equipments.

9. Receiver for a digital telecommunication system of the type including a plurality of radiomobile units o or PPs and/or a plurality of Wireless Relay Stations or WRSs and at least a fixed unit or RFP, said receiver comprising:

" a frequency synthesizer circuit suitable to determine the generation of a preset number of carrier frequencies;
" a circuit for the recovery of the clock;
" a correlation circuit for the recognition of the received time slot;
" a demodulation circuit;
" a decision circuit;
" a circuit for the measuring of the received power value or RSSI,

**characterized in that** it comprises the combination of the following additional means:

" fast sampling means (SAMPLER) which are structured in such a way to carry out the measuring cycle of the RSSI value on all channels belonging to the blind columns in a time interval equal to the duration of a time slot (Ltot), and the single RSSI measuring take place during a period of time D2 equal to:

$$D2 = [Ltot-D1 -9*D3]/ 10$$

where:

D1 = length of the preamble
D2 = measuring time of the RSSI value for each channel
D3 = switching time of the synthesizer from freq. J to Freq. J+1
Ltot = duration of the time slot.;

" analog/digital conversion means (A/D CONVERT) suitable to digitalise the signal corresponding to the output of said sampling means;
" processing means (DSP) of the signal suitable to implement a calculation algorithm in order to supply the final RSSI value;
" means (TIME BASE GENERATOR) for the generation of timing signals.

**10.** Radiomobile portable unit PP for a digital telecommunication system including also at least a fixed unit RFP, **characterized in that** it includes a receiver according to claim 9.

**11.** Wireless Relay Station WRS for a digital telecommunication system including also at least a fixed unit RFP, **characterized in that** it includes a receiver according to claim 9.

**12.** A fixed unit RFP for a digital telecommunication system including also a plurality of radiomobile portable units PRs, **characterized in that** it includes a receiver according to claim 9.

**13.** A fixed unit RFP for a digital telecommunication system including also a plurality of Wireless Relay Stations WRS, **characterized in that** it includes a receiver according to claim 9.

**14.** The fixed unit RFP of claim 12 **characterized in that** it is of the fast hopping type, and **In that** said measuring cycle of the RSSI value on blind columns coincides with the scanning of a single blind column if fast hopping terminals are used, or with the scanning of three blind columns if slow hopping terminals are used.

**15.** The fixed unit RFP of claim 12 **characterized in that** it includes means for communicating the scanning result to said plurality of PPs

**16.** The fixed unit RFP of claim 12, **characterized in that** it includes means for starting a Fast Setup procedure which consists in the choice and in the activation of a specific radio bearer.

**17.** The fixed unit RFP of claim 15, **characterized in that** it includes means for communicating the scanning results to said PPs using the "quality messages" according to the DECT standard.

**Patentansprüche**

**1.** Ein Verfahren zur Realisierung des Zugangs zu einem Funkkanal in einem digitalen Telekommunikationssystem, wobei Letzteres aus einer Vielzahl von beweglichen Mobilfunk-Einheiten und/oder einer Vielzahl von Funk-Relaisstationen (WRSs) sowie mindestens einer ortsfesten Funkeinheit (RFP) besteht, und wobei die besagte Vielzahl von PPs und/oder WRSs und/oder der besagte, in mindestens einem Exemplar vorhandene RFP geeignet sind, folgende Verfahrensschritte durchzuführen:

" Scannen der Zeit/Frequenz-Matrix der Kanäle in einer vorbestimmten Weise;

" Auslesen der erkannten Leistungswerte (RSSI-Werte) jedes Kanals sowie der auf von dem zugehörigen RFP auf Kanälen ausgestrahlten Identifizierungsdaten;
" Aufstellen einer RFP-Liste anhand von RSSI-Werten und der zugehörigen RFP-Identität;
" Aufstellen einer Kanalliste anhand der RSSI-Messwerte;
" Aufgliedern der Kanalliste in Bänder anhand geeigneter Schwellwerte;
" Auswählen eines Kanals des Bandes mit der geringsten Leistung;
" Fortsetzen einer Zugangsprozedur auf dem gewählten Kanal;

**dadurch gekennzeichnet, dass** es die folgenden Schritte zum Aktualisieren der Kanalliste innerhalb eines vorbestimmten Zeitintervalls vorsieht:

" Scannen - innerhalb der Dauer eines Zeitschlitzes pro Spalte - aller Kanäle der blinden Spalten mit Messen der zugehörigen RSSI-Werte;
" Aufschieben der im Aufbau befindlichen Kommunikation für die Dauer eines Rahmens immer dann, wenn die RSSI-Werte mindestens eines Kanals der Spalte des benutzten Kanals einen unter einer vorbestimmten Schwelle liegenden Leistungspegel angeben; Messen der RSSI-Werte in diesem Zeitschlitz auf eine herkömmliche Weise und damit Vervollständigen der Aktualisierung der Kanalliste.

**2.** Ein Verfahren gemäß Anspruch 1, **dadurch gekennzeichnet, dass** besagte vollständige Kanaltabelle von der besagten Vielzahl von PPs und/oder WRSs aufgestellt wird.

**3.** Ein Verfahren gemäß Anspruch 1, **dadurch gekennzeichnet, dass** besagte vollständige Kanaltabelle von dem besagten, in mindestens einem Exemplar vorhandenen RFP aufgestellt wird.

**4.** Ein Verfahren gemäß Anspruch 2 oder 3, **dadurch gekennzeichnet, dass** der besagte Messzyklus des RSSI-Wertes für jeden Kanal einer blinden Spalte in einem Zweitintervall liegt, dessen Länge der Dauer eines Zeitschlitzes gleicht, und dass die einzelnen RSSI-Messungen jeweils in einem Zeitintervall der Länge D2 stattfinden, und zwar mit:

$$D2 = [Ltot-D1 -9*D3]/ 10$$

wobei gilt:

" D1 = Länge der Präambel
" D2 = Messdauer des RSSI-Wertes jedes einzelnen Kanals
" D3 = Umschaltzeit des Synthesizers von der Frequenz J auf die Frequenz J+1
" Ltot = Länge eines Zeitschlitzes

5. Ein Verfahren gemäß Anspruch 3, **dadurch gekennzeichnet, dass** besagter, in mindestens einem Exemplar vorhandener RFP, welcher die vollständige Kanalliste aufstellt, vom Typ Fast-Hopping ist und dass der besagte Messzyklus des RSSI-Wertes der blinden Spalte zeitlich mit den Scannen einer einzelnen blinden Spalte (falls Endgeräte des Typs Fast-Hopping benutzt werden) oder mit dem Scannen dreier blinden Spalten (falls Endgeräte des Typs Slow-Hopping benutzt werden) zusammentrifft.

6. Ein Verfahren gemäß Anspruch 5, **dadurch gekennzeichnet, dass** besagter, in mindestens einem Exemplar vorhandener RFP das Ergebnis des Scannens an die besagte Vielzahl von PPs und/oder WRSs übermittelt oder eine Fast-Setup-Prozedur startet, welche aus der Wahl und der Aktivierung bestimmter Funkträger besteht.

7. Ein Verfahren gemäß Anspruch 6, **dadurch gekennzeichnet, dass** besagte Übermittlung der Ergebnisse des Scannens an die besagte Vielzahl von PPs und/oder WRSs, gemacht durch den besagten, in mindestens einem Exemplar vorhandenen RFP, unter Verwendung der im DECT-Standard festgelegten, so genannten Gütemeldungen (»Quality Messages«) durchgeführt wird.

8. Ein Verfahren gemäß Anspruch 1, **dadurch gekennzeichnet, dass** besagte blinde Spalte bei Fast-Hopping-Einrichtungen in einem Exemplar und bei Slow-Hopping-Einrichtungen in drei Exemplaren vorhanden ist.

9. Ein Empfänger für ein digitales Telekommunikationssystem des Typs, bei dem eine Vielzahl von mobilen Funkeinheiten (PPs) und/oder eine Vielzah) von Funkrelais-Stationen (WRSs) sowie mindestens eine ortsfeste Einheit (RFP) vorhanden ist; wobei dieser Empfänger folgende Komponenten enthält:

    " eine Frequenzsynthesizer-Schaltung, geeignet zum Steuern der Erzeugung einer vorbestimmten Gruppe von Trägerfrequenzen;
    " eine Schaltung zur Taktrückgewinnung;
    " eine Korrelatorschaltung zum Erkennen des Zeitschlitzes im Empfangssignal;
    " eine Demodulatorschaltung;
    " eine Entscheidungsschaltung;
    " eine Schaltung zum Messen des Empfangssignalleistungs-Pegels (RSSI);

**dadurch gekennzeichnet, dass** er eine Kombination der folgenden zusätzlichen Mittel enthält:

    " ein schnelles Sampling-Mittel (SAMPLER), das so konstruiert ist, dass es den Messzyklus des RSSI-Wertes auf allen zu den blinden Spalten gehörenden Kanälen innerhalb eines Zeitintervalls durchführt, dessen Dauer der Dauer eines Zeitschlitzes gleich ist (Ltot), und dass eine einzelne RSSI-Messung innerhalb eines Zeitintervalls D2 stattfindet, und zwar mit:

$$D2 = [Ltot-D1 -9*D3]/ 10$$

wobei gilt:

    D1 = Länge der Präambel
    D2 = Messdauer des RSSI-Wertes jedes einzelnen Kanals
    D3 = Umschaltzeit des Synthesizers von der Frequenz J auf die Frequenz J+1
    Ltot = Länge eines Zeitschlitzes

    " ein Mittel zur Analog/Digital-Wandlung (A/D CONVERT), geeignet zum Digitalisieren des Ausgangssignals des besagten Sampling-Mittels;
    " ein Mittel zur Signalverarbeitung (DSP), geeignet zum Implementieren eines Rechenalgorithmus zum Liefern des endgültigen RSSI-Wertes;
    " ein Mittel (TIME BASE GENERATOR) zum Erzeugen von Timing-Signalen.

10. eine bewegliche Mobilfunk-Einheit PP für ein digitales Telekommunikationssystem, welches außerdem mindestens eine ortsfeste Einheit RFP enthält, **dadurch gekennzeichnet, dass** sie einen Empfänger gemäß Anspruch 9 enthält.

11. eine Funkrelais-Station WRS für ein digitales Telekommunikationssystem, welches außerdem mindestens eine ortsfeste Einheit RFP enthält, **dadurch gekennzeichnet, dass** sie einen Empfänger gemäß Anspruch 9 enthält.

12. eine ortsfeste Einheit RFP für ein digitales Telekommunikationssystem, welches außerdem eine Vielzahl von beweglichen Mobilfunk-Einheiten (PPs) enthält, **dadurch gekennzeichnet, dass** sie einen Empfänger gemäß Anspruch 9 enthält.

13. eine ortsfeste Einheit RFP für ein digitales Telekommunikationssystem, welches außerdem eine Vielzahl von Funkrelais-Stationen (WRSs) enthält, **dadurch gekennzeichnet, dass** sie einen Empfänger gemäß Anspruch 9 enthält.

**14.** die ortsfeste Einheit RFP von Anspruch 12, **dadurch gekennzeichnet, dass** sie vom Typ Fast-Hopping ist und dass der besagte Messzyklus des RSSI-Wertes blinder Spalten zeitlich mit den Scannen einer einzelnen blinden Spalte (falls Endgeräte des Typs Fast-Hopping benutzt werden) oder mit dem Scannen dreier blinder Spalten (falls Endgeräte des Typs Slow-Hopping benutzt werden) zusammentrifft.

**15.** die ortsfeste Einheit RFP von Anspruch 12, **dadurch gekennzeichnet, dass** sie Mittel enthält, um das Ergebnis des Scannens an die besagte Vielzahl von PPs zu übermitteln.

**16.** die ortsfeste Einheit RFP von Anspruch 12, **dadurch gekennzeichnet, dass** sie Mittel enthält, um eine Fast-Setup-Prozedur zu starten, welche aus der Wahl und der Aktivierung eines bestimmten Funkträgers besteht.

**17.** die ortsfeste Einheit RFP von Anspruch 15, **dadurch gekennzeichnet, dass** sie Mittel enthält, um das Ergebnis des Scannens an die besagten PPs unter Verwendung der im DECT-Standard festgelegten Gütemeldungen (»Quality Messages«) zu übermitteln.

**Revendications**

**1.** Procédé de réalisation de l'accès à un canal radioélectrique dans un système de télécommunication numérique comprenant une pluralité d'appareils radio portatifs mobiles et/ou une pluralité de stations relais hertziennes ou WRS et au moins un appareil radio fixe ou RFP,
ladite pluralité de PP et/ou de WRS et/ou ledit au moins un RFP convenant pour exécuter les étapes suivantes d'un processus :

" balayage de la matrice temps-fréquence des canaux selon des modalités prédéfinies ;
" lecture des valeurs de puissance détectées ou RSSI de chaque canal et des données d'identité sur les canaux transmises par le RFP correspondant ;
" compilation d'une liste de RFP en utilisant les valeurs de RSSI et l'identité du RFP correspondant ;
" compilation d'une liste de canaux en utilisant les mesures du RSSI ;
" organisation de la liste des canaux en bandes déterminées par des seuils appropriés ;
" sélection d'un canal de la bande de puissance la plus basse ;
" suivi dune procédure d'accès sur le canal choisi,

**caractérisé en ce qu**'il prévoit les étapes suivantes pour mettre à jour la liste des canaux dans un intervalle prédéfini :

" balayage en séquence - pendant la durée d'une tranche de temps par colonne - de tous les canaux des colonnes aveugles, en mesurant le RSSI ;
" suspension de la communication en cours d'établissement pendant une trame chaque fois que les valeurs de RSSI d'au moins un canal de la colonne du canal utilisé indiquent une puissance inférieure à un seuil prédéfini, et mesure du RSSI sur cette tranche de temps d'une manière classique, en réalisant donc la mise à jour de la liste complète des canaux.

**2.** Procédé selon la revendication 1, **caractérisé en ce que** ladite table « complète » de canaux sera établie par ladite pluralité de PP et/ou de WRS.

**3.** Procédé selon la revendication 1, **caractérisé en ce que** ladite table complète de canaux sera établie par ledit au moins un RFP.

**4.** Procédé selon la revendication 2 ou 3, **caractérisé en ce que** ledit cycle de mesure de la valeur de RSSI pour chaque canal de colonne aveugle a lieu dans un intervalle de temps égal à la durée d'une tranche de temps, et **en ce que** les mesures individuelles de RSSI ont lieu en un laps de temps D2 égal à :

$$D2 = [Ltot-D1 -9*D3]/10,$$

où :

" D1 = longueur du préambule ;
" D2 = temps de mesure de la valeur de RSSI pour chaque canal ;
" D3 = temps de commutation du synthétiseur de la fréqu. J à la fréqu. J+1 ;
" Ltot = durée de la tranche de temps.

**5.** Procédé selon la revendication 3, **caractérisé en ce que** ledit au moins un RFP établissant la table complète des canaux est du type à sauts de fréquence rapides et **en ce que** ledit cycle de mesure de la valeur du RSSI de la colonne aveugle coïncide avec le balayage d'une seule colonne aveugle si des terminaux à sauts de fréquence rapides sont utilisés, ou avec le balayage de trois colonnes aveugles si des terminaux à sauts de fréquence lents sont utilisés.

**6.** Procédé selon la revendication 5, **caractérisé en ce que** ledit au moins un RFP communique le résultat du balayage à ladite pluralité de PP et/ou de WRS ou **en ce qu'**il entame une procédure d'établissement rapide de la liaison qui comprend le choix et l'activation de porteuses radioélectriques spécifiques.

7.  Procédé selon la revendication 6, **caractérisé en ce que** ladite communication des résultats du balayage à ladite pluralité de PP et/ou de WRS par ledit au moins un RFP sera exécutée en utilisant ce qu'on appelle les « messages sur la qualité » selon la norme DECT.

8.  Procédé selon la revendication 1, **caractérisé en ce que** ladite colonne aveugle est au nombre d'une colonne pour les dispositifs à sauts de fréquence rapides et au nombre de trois colonnes pour les dispositifs à sauts de fréquence lents.

9.  Récepteur pour un système de télécommunication numérique du type comprenant une pluralité d'appareils radio mobiles ou PP et/ou une pluralité de stations relais hertziennes ou WRS et au moins un appareil fixe ou RFP, ledit récepteur comprenant:

    " un circuit synthétiseur de fréquences convenant pour déterminer la production d'un nombre prédéfini de fréquences porteuses ;
    " un circuit pour récupérer le signal d'horloge ;
    " un circuit de corrélation pour reconnaître la tranche de temps reçue ;
    " un circuit de démodulation ;
    " un circuit de décision ;
    " un circuit pour mesurer la valeur de la puissance reçue ou RSSI,

    **caractérisé en ce qu'**il comprend la combinaison des moyens additionnels suivants:

    " des moyens d'échantillonnage rapides (ECHANTILLONNEUR) qui sont structurés de façon à exécuter le cycle de mesure de la valeur de RSSI sur tous les canaux faisant partie des colonnes aveugles dans un intervalle de temps égal à la durée d'une tranche de temps (Ltot), et la mesure d'un seul RSSI a lieu durant un laps de temps D2 égal à:

    $$D2 = [Ltot-D1 -9*D3]/10,$$

    où:

    D1 = longueur du préambule ;
    D2 = temps de mesure de la valeur de RSSI pour chaque canal ;
    D3 = temps de commutation du synthétiseur de la fréqu. J à la fréqu. J+1 ;

    Ltot = durée de la tranche de temps ;

    " des moyens de conversion analogique-numérique (CONVERTISSEUR A-N) convenant pour numériser le signal correspondant à la sortie desdits moyens d'échantillonnage ;
    " des moyens de traitement (DSP) du signal convenant pour mettre en oeuvre un algorithme de calcul afin de fournir la valeur finale de RSSI ;
    " des moyens (GENERATEUR DE BASE DE TEMPS) pour produire les signaux de synchronisation.

10. Appareil radio portatif mobile PP pour un système de télécommunication numérique comprenant également au moins un appareil fixe RFP, **caractérisé en ce qu'**il comprend un récepteur selon la revendication 9.

11. Station relais hertzienne WRS pour un système de télécommunication numérique comprenant également au moins un appareil fixe RFP, **caractérisée en ce qu'**elle comprend un récepteur selon la revendication 9.

12. Appareil fixe RFP pour un système de télécommunication numérfque comprenant également une pluralité d'appareils radio portatifs mobiles PP, **caractérisé en ce qu'**il comprend un récepteur selon la revendication 9.

13. Appareil fixe RFP pour un système de télécommunication numérique comprenant également une pluralité de stations relais hertziennes WRS, **caractérisé en ce qu'**il comprend un récepteur selon la revendication 9.

14. Appareil fixe RFP de la revendication 12, **caractérisé en ce qu'**il est du type à sauts de fréquence rapides, et **en ce que** ledit cycle de mesure de la valeur de RSSI sur les colonnes aveugles coïncide avec le balayage d'une seule colonne aveugle si des terminaux à sauts de fréquence rapides sont utilisés, ou avec le balayage de trois colonnes aveugles si des terminaux à sauts de fréquence lents sont utilisés.

15. Appareil fixe RFP de la revendication 12, **caractérisé en ce qu'**il comprend des moyens pour communiquer le résultat du balayage à ladite pluralité de PP.

16. Appareil fixe RFP de la revendication 12, **caractérisé en ce qu'**il comprend des moyens pour lancer une procédure d'établissement rapide de liaison qui se compose du choix et de l'activation d'une porteuse radioélectrique spécifique.

**17.** Appareil fixe RFP de la revendication 15, caractérisé en qu'il comprend des moyens pour communiquer les résultats du balayage auxdits PP en utilisant les « messages sur la qualité » selon la norme DECT.

**Fig. 1**

**Fig. 2a**

Fig. 2b

Fig. 3

Fig. 4

EP 1 064 816 B1